# EUROPEAN PATENT SPECIFICATION

(11) **EP 2 984 332 B1**
(45) Date of publication and mention of the grant of the patent: **11.07.2018**
(21) Application number: 13721812.9
(22) Date of filing: 11.04.2013
(51) Int. Cl.: F03B 11/02, F03B 13/10, F03B 17/06, F03B 13/26

(54) **WATERMILL DEVICE AND METHOD OF GENERATING ELECTRICAL ENERGY BY MEANS OF SUCH A DEVICE**
WASSERMÜHLENVORRICHTUNG UND VERFAHREN ZUR ERZEUGUNG VON ELEKTRISCHER ENERGIE MITTELS SOLCH EINER VORRICHTUNG
DISPOSITIF DE MOULIN À EAU ET PROCÉDÉ DE GÉNÉRATION D'ÉNERGIE ÉLECTRIQUE AU MOYEN D'UN TEL DISPOSITIF

(43) Date of publication of application: 17.02.2016
(73) Proprietor: Oryon Consultancy&Development, 6621 KG Dreumel (NL)
(72) Inventor: ORIJ, Jacobus Johannes, NL-6621 KG Dreumel (NL)
(74) Representative: Algemeen Octrooi- en Merkenbureau B.V.
(86) International application number: PCT/NL2013/000022
(87) International publication number: WO 2013/154421

(56) References cited:
- EP-A1- 1 205 661
- WO-A1-92/21877
- DE-A1- 10 024 022
- GB-A- 2 237 330
- US-A- 3 928 771
- US-A- 6 109 863
- US-A1- 2008 231 057

## Description

The present invention relates to a watermill device for use in flowing water, such as a river or tidal waters, which is designed such that it can be placed entirely under water for converting the force of the flowing water into electrical energy.

The generation of electrical energy from the force of flowing water is known. This generation of energy is an interesting option especially where there is a major drop or where a major level difference can be artificially created. In the case of a small drop, however, flowing water may still be utilized for conversion into energy that is of use to man. A disadvantage of known applications is, however, that they often put obstacles in the way of users of the flowing water, such as the shipping industry, but also to fish. Additional provisions are accordingly necessary for minimizing such obstacles.

US 2008/0231057 discloses a watermill device having a horizontal flow channel with an inlet opening and an outlet opening and having a blade wheel. The blade wheel is provided at its outer circumference with hinging flaps which are mounted to the wheel in a spring-damped manner, such that they have a comparatively great resistance when moving along with the flow and a comparatively small resistance when moving against the flow. Transmission means are further provided, for example in the form of a belt, which transmit a rotary movement of the blade wheel to a generator.

US6109863 discloses a fully submersible apparatus for generating electricity from liquid flow as in an ocean or river current. A buoyant structure is fully submersible and has at least one pair of counter-rotating side-by-side motors with a plurality of angularly spaced radial vanes each having a plurality of rotatable subvanes such that current impinging upon the motor will impinge on a closed or solid vane to effect rotation of the motor and its shaft during a first phase of the rotational cycle and will impinge on open vanes for free passage therethrough on the return or second phase of rotation of the motor.

US3928771 discloses a water current power generator system comprising one or more generator ships, wherein the ships are anchored to a water bottom to generate power from sea currents.

WO9221877 discloses an underwater turbine containing a supporting structure and a rotor mounted therein. The rotor has a rotor shaft and blades, wherein the blades each contain a bearer with at least one plate which plate can pivot with regard to the bearer around a hinge pin which is parallel to the rotor shaft and a stop for the plate which is fixed onto the bearer.

GB2237330 discloses a machine for utilising the energy in fluid flows. The machine comprises a support and a central drive shaft connected to a support arm, wherein each arm carries at least one vane. The at least one vane can pivot on bearing rods and may be flexible so that they can present an advantageous profile to the fluid flow as the support arms rotate about the central drive shaft.

DE10024022 discloses a generator with several generator wheels.

EP1205661 discloses a prime mover for harnessing energy from a flow of a fluid. The prime mover comprises a shaft having a rotational axis, arranged to be rotatably mounted to a substructure. The shaft comprises at least one arm extending radially from the shaft. The at least one arm comprises at least one blade, wherein the at least one blade is oriented such that fluid flow acting on the blade effects rotation of the shaft. The at least one blade is movably mounted on an arm and each blade is movable from a first position, having a first drag, to a second position, having a second drag, wherein the first drag is higher than the second drag.

The present invention has for its object to provide a watermill device as defined in the opening paragraph which is more efficient in converting the power of flowing water into electrical energy than the known devices. According to the invention, this object is achieved by a watermill device according to the preamble of claim 1 wherein the blades each comprise lamellae that are pivotable about a pivot axis extending at least substantially parallel to the axis of rotation of the blade wheel, wherein said pivot axis is always located at or adjacent one longer side of the respective lamella, wherein a pivoting movement of the lamellae is hampered by limiting means when the relevant blade is moving along with the flow, and wherein the lamellae are freely pivotable when the relevant blade is moving against the direction of flow. Wherever in the present document a direction or orientation is mentioned, this is deemed to signify the direction or orientation in or with which a watermill device with a substantially horizontally directed flow channel parallel to the direction of flow is placed in a watercourse. A watermill device according to the invention may be placed entirely under water, so that users of the flowing water, also denoted watercourse in the present document, such as boats, swimmers or the like, experience no or hardly any obstruction therefrom. The watermill device may be placed on the bottom of a watercourse such as a river and, provided the river is sufficiently deep, at such a depth that river traffic is not hampered thereby. The watermill device does not require the watercourse to be closed off over its full width so as to create a sufficient drop or to provide a narrowed passage. During operation water flows through the inlet opening into the at least one flow channel and along the at least one blade wheel.

According to the invention, the physical shafts or virtual axes about which the lamellae of the blade wheel pivot are each located at or adjacent a longer side of the relevant lamellae, with the result that the blades behave like vanes in principle, always seeking the orientation that has the least resistance. This means that the lamellae when placed in a flowing medium will tend to orient themselves away from the relevant pivot axes parallel to the direction of flow in a downstream direction. If a blade is moving along with the direction of flow, however, the limiting means will prevent the lamellae from taking up the orientational positions of least resistance. The limiting means are designed so as to orient the lamellae of a blade moving with the flow substantially perpendicularly to the flow, so that an at least substantially closed blade is formed by the lamellae which offers a great resistance to the flowing water. The flowing water thus exerts a comparatively great force on the relevant blade. A device according to the invention renders it possible to provide a blade wheel with lamellae over substantially its full length, whereby a comparatively high efficacy can be achieved. Since a blade wheel moving along with the flow experiences a comparatively great resistance against the flow, whereas a blade wheel moving against the flow experiences a comparatively small resistance against the flow, the blade wheel will turn about its rotation shaft. The force exerted on a blade by the flow of water for driving the blade wheel will vary over one rotation of the blade wheel from a maximum, when the blade is substantially perpendicular to the direction of flow and moves with the flow, via a minimum, when it is substantially parallel to the direction of flow, to a further minimum, i.e. a drive force in negative direction when the blade is substantially perpendicular to the direction of flow and is moving against the flow, and then via the minimum in parallel orientation to the maximum again at the end of the rotation. Since the flow resistance is dependent on the continuously changing position during a rotation, the blade wheel will continue to rotate. The object of the present invention is thus achieved.

FR 2525694 (referred to as D2 hereinafter) describes a watermill device that is provided with blades having lamellae which are each pivotable about a central longitudinal axis of the relevant lamella, which axis extends parallel to the rotation shaft of the blade wheel. A lamella that can rotate about a central longitudinal axis is unstable when oriented parallel to the flow. Small disturbances in the flow of the fluid in which the lamella is arranged may cause the lamella to flap over (partly). This makes for an unquiet lamella and leads to an unnecessarily high resistance when the relevant blade is moving against the flow, which detracts from the efficacy of the watermill device. When the relevant blade is moving with the flow, the lamella is also sensitive to disturbances in the flow of the fluid, with the result that the resistance decreases relatively. This also adversely affects the efficacy. In addition, a lamella may flap over completely in the case of a major disturbance in the flow of fluid, which may lead to the rotating blade wheel coming to an almost complete standstill. Since the watermill is arranged in a housing that has an influence on the flow and preferably conducts a comparatively large quantity of fluid into the watermill device, the occurrence of turbulences in the flow is inevitable.

The at least one flow channel of the water mill according to the invention is preferably provided with inner walls that have a low flow resistance relative to water that flows past them during operation. It will be evident that the efficacy of a watermill device according to the present invention increases in proportion as the flow velocity of the water in the flow channel is higher.

If the at least one flow channel is designed to guide water flowing through it in the direction where the blades of the at least one blade wheel move along with the flow, the flow can be even better utilized for driving the relevant blades that are to be driven, and any resistance applied to blades that are not to be driven at any given moment can be reduced in that the flow is partly guided away therefrom.

If at least two blade wheels are provided one behind the other in the flow channel, it is preferred that said blade wheels placed one behind the other rotate in mutually opposed directions. The water may thus move through the relevant flow channel in an undulating manner, whereby the water present in the flow channel achieves an optimized energizing effect on the relevant blade wheels.

In a preferred embodiment of the present invention, the rotation shaft of the at least one blade wheel extends at least substantially vertically. Although alternative orientations of the rotation shaft are possible, preferably perpendicular to the direction of flow, for example a horizontal orientation, a blade wheel with a vertically oriented rotation shaft is loaded in the most favourable manner, the rotation shaft then being substantially not subject to the influence of changing forces of gravity of the blades during operation.

It is preferred that each of the lamellae is fastened to a respective blade so as to be freely moveable about the associated pivot axis, subject to the limitation imposed by the limiting means. The lamellae thus have the freedom to seek and assume the orientation with the least resistance at all times, except for the limitation imposed by the limiting means.

It is preferred in the present invention that a blade is provided with lamellae over a length of at least 50% of the radius of the blade wheel. This means that at least 50% of the length of the wheel radius as defined by the blade is covered by the lamellae on the surface area of the relevant blade when the lamellae are oriented parallel to the relevant blade. The larger the surface area of the blade that is provided with lamellae, the higher the efficacy that can be achieved by the blade wheel.

In a preferred embodiment of the present invention, the distance between the pivot axes of two mutually adjoining lamellae is smaller than the width of a lamella associated with either of said two pivot axes. An arrangement can be obtained thereby wherein two mutually adjoining lamellae partly overlap in the case of parallel orientation, so that a closed surface will be formed by the lamellae.

It is preferable here that a pivot shaft of a lamella forms a limiting means for an adjoining lamella. The envisaged limitation of the freedom of movement of the lamellae can be achieved thereby in a simple manner.

A flow-efficient shape of a lamella can be achieved in that a cross-section of a lamella taken from the pivot axis in the direction of the extremity located opposite the pivot axis in a direction perpendicular to the pivot axis of the relevant lamella is designed so as to be converging. Such a shape, for example a drop shape, was found to offer a comparatively low resistance to a fluid flowing past it in an arrangement that is oriented parallel to the direction of flow.

It is preferred that a lamella is designed at the side of the pivot axis such that its resistance to water flowing past it is minimized when the relevant side is facing in upstream direction. Although this measure seems to be formulated as a wish here, it will be immediately clear to those skilled in the art of hydrology which shapes the relevant side of a lamella could assume in order to comply with this requirement.

It is preferred that the blades are distributed at least substantially at regular angular intervals around the rotation shaft. A regular distribution of the blades around the rotation shaft leads to a favourable, usually even rotational motion of the blade wheel. According to the invention, at least two blade wheels are provided one behind the other in a flow channel. The provision of a second, and possibly a third and further blade wheels in a housing, possibly lengthened for this purpose, requires a comparatively small effort compared with the provision of a second, and possibly a third and further watermill devices each comprising one blade wheel and provisions for converting the rotation of the rotation shaft into electrical energy. The flow velocity of the water in the at least one flow channel will indeed be reduced by the first, upstream blade wheel, so that the efficacy of the second blade wheel will be lower than that of the first blade wheel, but in many cases the second, third or further blade wheel is still profitable.

It is preferred that the water supply range is funnel-shaped, converging in the direction of the at least one flow channel. A comparatively large proportion of the flow in the flow channel is thus pushed into the flow channel, which leads to a higher efficacy of the watermill device.

It is furthermore preferred that the water supply range is provided with a protection member that is designed to prevent objects or animals above a certain size that are present in the water from entering the watermill device. It will be clear that objects as well as fish or other animals that enter between a blade and a wall of a flow channel and possibly get stuck there have a detrimental effect on the yield of the watermill device. A watermill device could even get jammed or be damaged thereby. Such a protection member prevents such a risk at least to a considerable extent.

If the protection member extends obliquely upwards when viewed in the direction of flow, objects and animals can be guided away from the watermill device in a comparatively simple manner with a reduced risk of damage to the protection member and/or an animal.

In a preferred embodiment, the watermill device comprises at least a housing that is defined by the water-guiding means, an upper wall, and a lower wall, and that accordingly surrounds the flow channel. The housing thus provides a fully closed water flow channel at least when viewed transversely to the direction of flow. The upper and lower wall may also serve to protect the moving parts. The upper and/or lower wall may alternatively be omitted so as to improve the accessibility of the device, for example for maintenance work.

It is preferred in an embodiment with a fully closed flow channel that the water supply range and/or the water discharge range are/is defined by an inlet opening and/or an outlet opening, respectively.

In a preferred embodiment of the present invention, two or more flow channels are provided in a housing. The yield, and often also the efficacy of a watermill device can be enhanced thereby. It is true that a second flow channel requires a larger housing, but the provisions for converting the rotary motion of the various rotation shafts into electrical energy and the transport thereof to the dry land take place in an efficient manner.

In a preferred embodiment of the present invention, the inlet and/or the at least one flow channel are/is provided with at least one sluice opening designed to prevent a (too) great pressure on the at least one blade wheel, for example in periods when the flow velocity of the watercourse is comparatively high. In that case part of the water introduced via the inlet is discharged to outside the housing through the at least one sluice opening.

It is preferred that the watermill device comprises a watertight space in which a permanent magnet generator is accommodated. The permanent magnet generator has to operate in a water-free space. An integration into the housing or at least into a watertight compartment thereof is accordingly desirable. An alternative is that the PMG is or should be provided as an independent unit at a distance from the housing of the watermill device.

To enhance the yield of the watermill device, it may be constructed such that it comprises two or more blade wheels stacked one upon the other. This is denoted a modular building system.

In a preferred embodiment of the present invention, the watermill device is constructed so as to be reversible, i.e. the watermill device can be operated in two mutually opposed directions of flow. In many cases this is achieved in that the device is at least substantially designed so as to have a centre of symmetry, i.e. the water supply range is of the same design as the water discharge range and the same holds for the flow channels, obviously when viewed from opposite directions. Such a watermill device is highly suitable for use in regions where the water can flow in two opposed directions, such as tidal waters.

The present invention in a second aspect thereof relates to the use of a watermill device according to the first aspect of the present invention in flowing water, such as a river or tidal waters, of which the at least one flow channel is preferably entirely under water. Operation with a flow channel partly above water is obviously also possible. The operation with the at least one flow channel entirely under water, however, gives the watermill device a higher efficacy. Another major advantage of operation below water is that the watermill device can be utilized while out of sight and, given a sufficiently deep water flow, can be located such that ships up to a certain draught, or even all ships, can pass through the waterway without being hampered by the watermill device.

Preferably, the at least one flow channel is located at a distance from the bottom of the flowing water. The vertical distance from the bottom of the flowing water to the at least one flow channel is at least 50 cm. A placement at a (sufficient) distance from the bottom of preferably at least 75 cm prevents or at least reduces the risk that sediment will flow along with the water into the housing and that undercurrents will arise in the flow which could affect the bottom of the watercourse.

Preferably, the at least one flow channel is oriented substantially horizontally in the flowing water. Given an at least substantially horizontal orientation of the flow channel, water flowing through the flow channel will not be unnecessarily interfered with and the watermill device will have a comparatively high efficacy.

To prevent damage to the bottom at the outlet side of the flow channel, according to the invention the outlet of the at least one flow channel extends in a slightly upward direction relative to the at least one flow channel when viewed in the direction of flow. This helps to prevent or at least reduce any damage to the bottom of the watercourse behind the watermill device.

The invention will now be explained in more detail with reference to the drawings of two preferred embodiments of the watermill device according to the present invention, wherein:
Figure 1a is a diagrammatic cut-away plan view of an embodiment of a watermill device according to the present invention;
Figure 1b is a diagrammatic cut-away side elevation of the watermill device of figure 1a;
Figure 2 is a diagrammatic cut-away plan view of a flow along a blade wheel of the watermill device of figure 1;
Figure 3 is a diagrammatic cut-away plan view of an alternative embodiment of a watermill device according to the invention;
Figure 4 is a vertical cross-sectional view taken on the line IV-IV in figure 3;
Figure 5 is a diagrammatic perspective view of another alternative embodiment of a watermill device according to the present invention;
Figures 6a, 6b are diagrammatic plan views of the watermill device of figure 5; and
Figures 7a and 7b show cross-sections through two mutually adjoining lamellae in a state in which the associated blade moves with and against the flow, respectively.

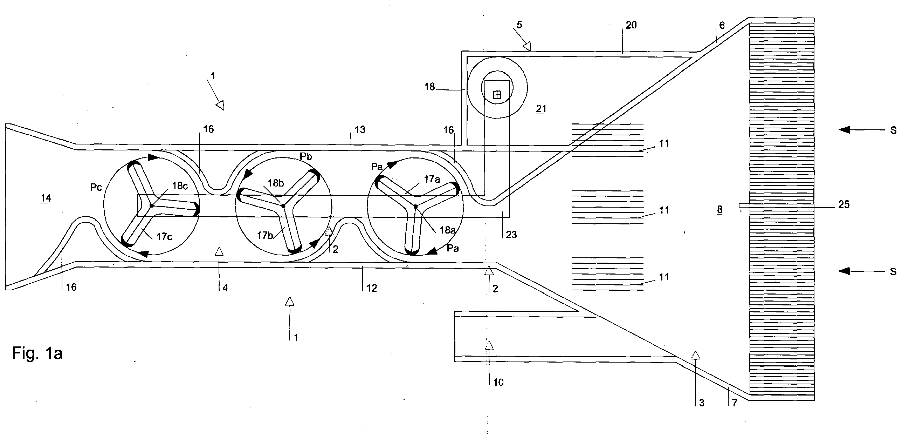

In figure 1a a diagrammatic cut-away plan view of an embodiment of a watermill device 1 according to the present invention is shown. The watermill device 1 comprises a housing 2 which constitutes an inlet 3, a flow channel 4, and a watertight PMG compartment 5. The inlet 3 has two vertical side walls 6, 7 that converge towards the flow channel 4, a lower wall 8, and an upper wall (not shown in figure 1a). A sluice cylinder 10 is provided in the side wall 7. The location of sluice strips 11 present in the upper wall has been diagrammatically indicated. The flow channel 4 is defined by two side walls 12, 13, a lower wall 14 and an upper wall (not shown in figure 1a). Vertically extending profiles 16 having a cross-section in the shape of a truncated cone are present at the inner side of the side walls 12, 13 of the flow channel 4. Three blade wheels 17a, 17b, 17c are arranged in the flow channel 4, the paths of the blades 28 being bounded in part by profiles 16 located at a short distance from a portion of said paths. The blade wheels 17a-c rotate about respective rotation shafts 18a, 18b, 18c along arrows Pa, Pb, Pc during operation. A watertight PMG compartment 5 is formed at the area of the transition from the inlet 3 to the flow channel 4 by part of the side wall 6 of the inlet 3, part of the side wall 13 of the flow channel 4, side wall 19, side wall 20, lower wall 21, and an upper wall (not shown in figure 1a). Reference numeral 23 in figure 1a diagrammatically represents a known mechanical transmission for transmitting a rotary motion of the blade wheel 17 to a permanent magnet generator (PMG) inside the watertight PMG compartment 5. The inlet 3 is provided with a grid 25 against fish and pollutants at its upstream side.

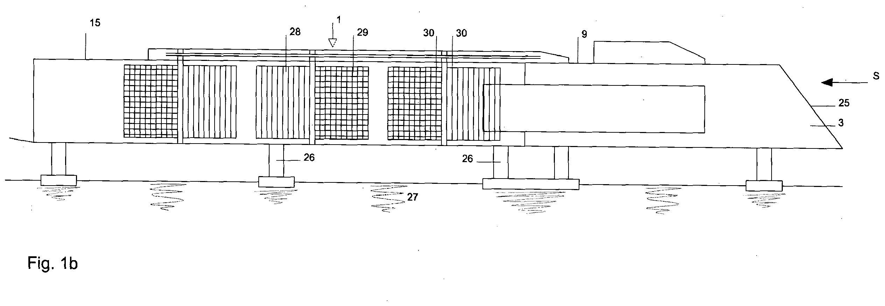

Figure 1b shows the watermill device 1 of figure 1a in a diagrammatic cut-away side elevation. Components of the watermill device 1 have obviously been given the same reference numerals as in figure 1a. The upper wall of the inlet 3 has reference numeral 9 here and upper wall of the flow channel 4 has reference numeral 15. The watermill device 1 is securely anchored to a base surface 27 by means of pillars 26.

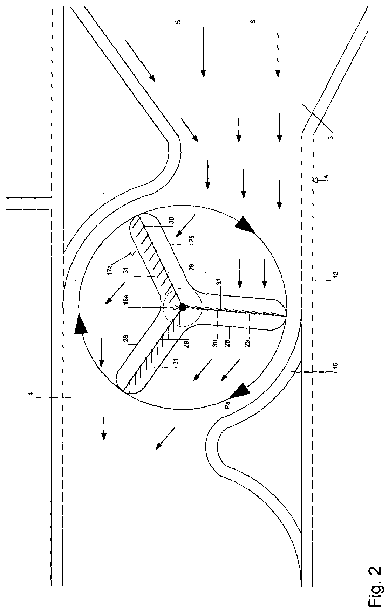

Figure 2 is a diagrammatic cut-away plan view of a portion of the flow channel 4 in which the blade wheel 17a is present. The blade wheel 17a is shown diagrammatically, but in greater detail than in figure 1a. The blade wheel 17a has a rotation shaft 18a which extends in vertical direction in the flow channel during operation and about which three blades 28 can rotate. Each of the three blades 28 has a central surface 29 in the form of a coarse raster here. Lamellae 31 which are pivotable about vertical axes 30 are mounted to said raster.

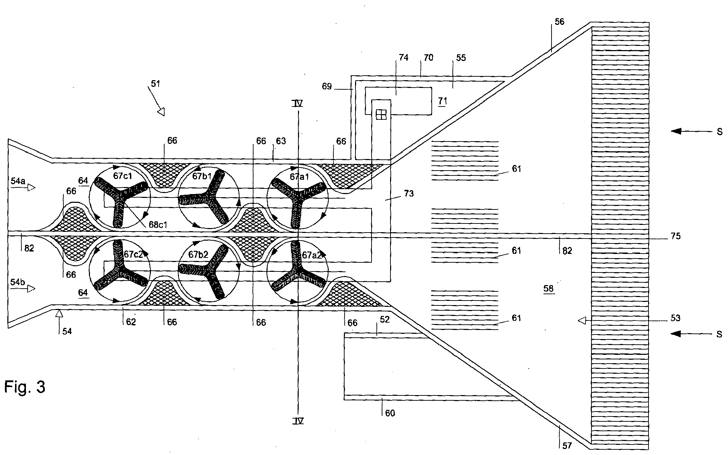

Figure 3 shows an alternative embodiment of a watermill device 51 according to the present invention. The watermill device 51 is comparable to the watermill device 1, but it has two flow channels 54. Elements in figure 3 corresponding to elements in figures 1a and 1b have been given reference numerals that are 50 higher than those in figures 1a and 1b unless explicitly stated otherwise. A striking difference of the watermill device 51 relative to the watermill device 1 is that in the watermill device 51 two flow channels 54a, 54b separated by a separation wall 82 are fed by one inlet 53, through which the separation wall 82 also extends. The separation wall 82 functions with respect to the two flow channels 54a, 54b as do the side walls 12 and 13 in figure 1a.

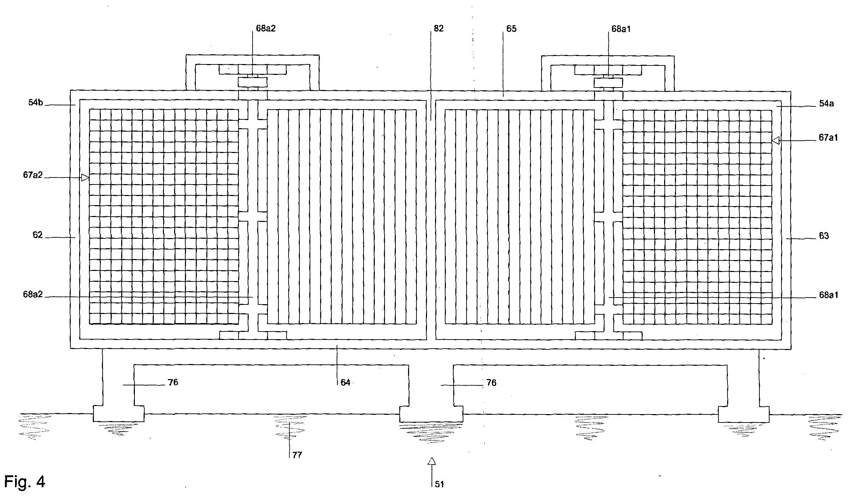

Figure 4 finally is a vertical cross-sectional view taken on the line IV-IV in figure 3. Elements in figure 4 corresponding to elements in figure 3 have been given the same reference numerals as the elements in figure 3. The flow channels 54a, 54b are defined by a lower wall 64 and an upper wall 65, side walls 62 and 63, and the separation wall 82. Within the flow channels 54a, 54b there are two blade wheels 67a1 and 67a2. Each blade wheel 67a1 and 67a2 has a rotation shaft 68a1, 68a2 and blades, of which only a raster 79 forming a central surface is shown in figure 4. The lamellae lie against the raster of the associated blade at the crosshatched sides of the rotation shafts 68a1, 68a2. The lamellae located in front of the raster are visible as a result of this. At the other sides of the rotation shafts, however, the lamellae are located right behind the vertical parts of the raster 79, i.e. in the extended direction thereof as seen in the viewing direction, which vertical parts coincide with the pivot axes 80 of the lamellae, so that the raster is visible in front of the lamellae.

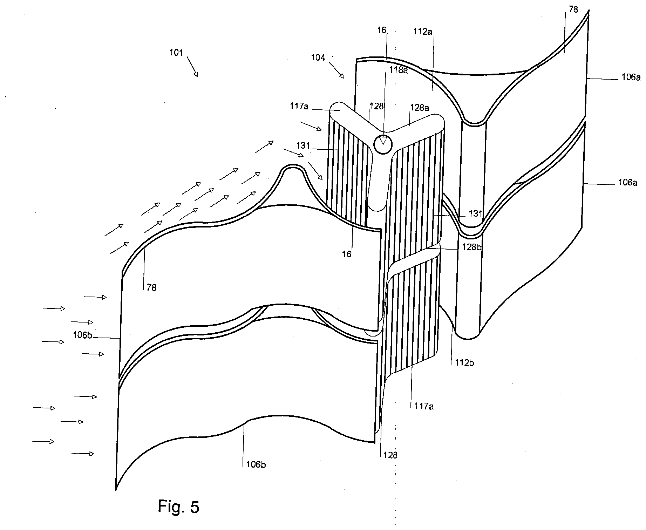

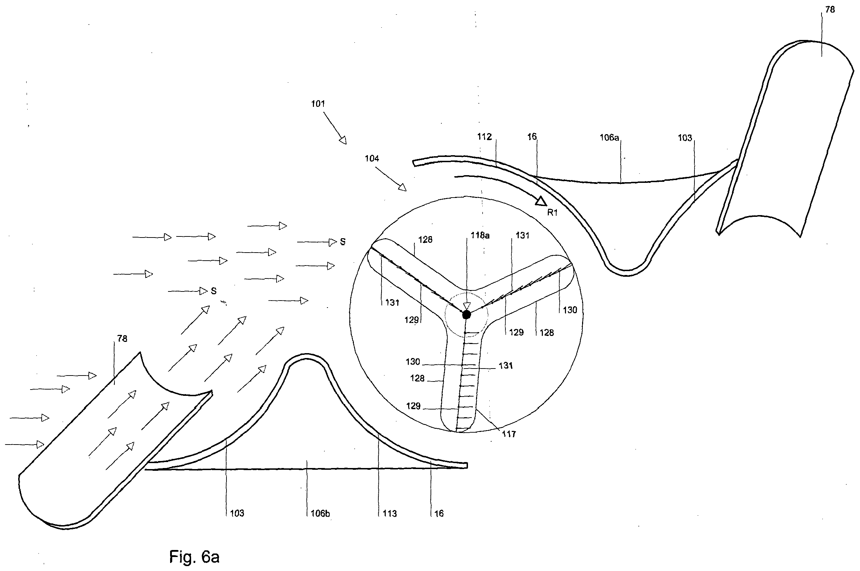

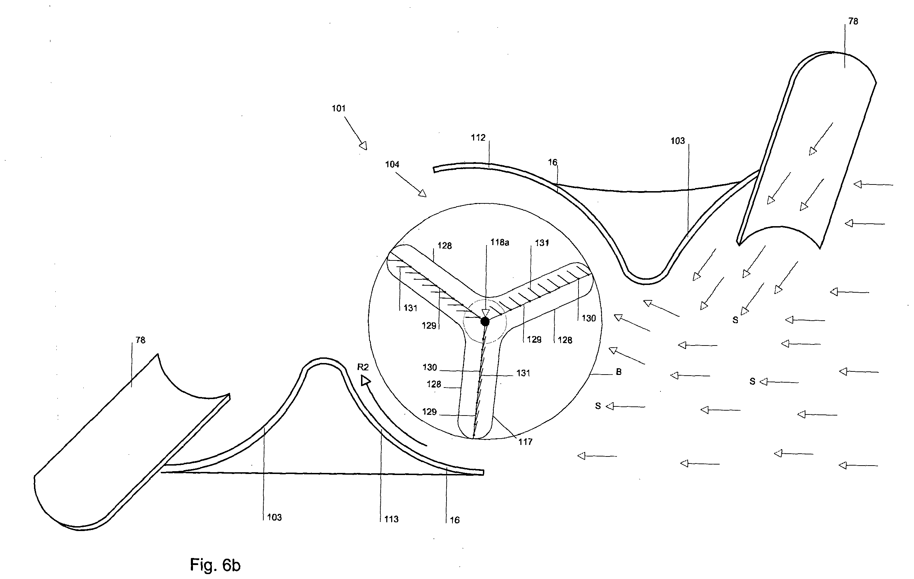

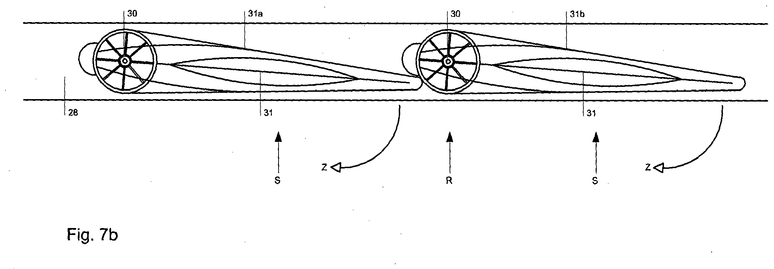

Figures 5, 6a and 6b diagrammatically show an embodiment of a watermill device 101 according to the present invention in perspective view and in plan view, respectively, wherein the flow channel 104 is defined only by two side walls 112a, 112b and 113a, 113b of water-guiding members 106a, 106b and 107a, 107b, respectively, which will be discussed in more detail further below. The watermill device 101 also comprises a PMG compartment, but this has been left out in the drawings of this embodiment for the sake of clarity. Those skilled in the art know how to connect blade wheels 117a, 117b to a PMG generator in order to convert the rotation of the blade wheels 117a, 117b into electrical energy. The blade wheels 117a, 117b each comprise three blades 128 which are arranged at angles of 120° to one another. The blades 128 each comprise an upper arm 128a and a lower arm 128b between which pivotable lamellae 131 extend. The lamellae 131 are arranged in the watermill device 101 such that a pivot shaft 130 of a lamella 131 constitutes an abutment for an adjoining lamella 131 when the relevant blade 128 is moving along with the flow. The pivot shaft 130 thus limits the pivoting movement of the adjoining pivotable lamella 131. This can be seen in figures 6a, 6b and in more detail in figure 7b. The water-guiding members of the watermill device 101 have a centre of symmetry in the axis of rotation or shaft 118a of the mutually superimposed blade wheels 117a, 117b. This central symmetry need not be maintained in detail, but it serves to ensure that the two blade wheels 117a, 117b can receive flows from both sides. The watermill device 101 is thus suitable for placement in tidal waters, in which case the blade wheels 117a, 117b rotate in clockwise direction (arrow R1 in figure 6a) or against the current (arrow R2 in figure 6b), depending on the direction of flow of the water.

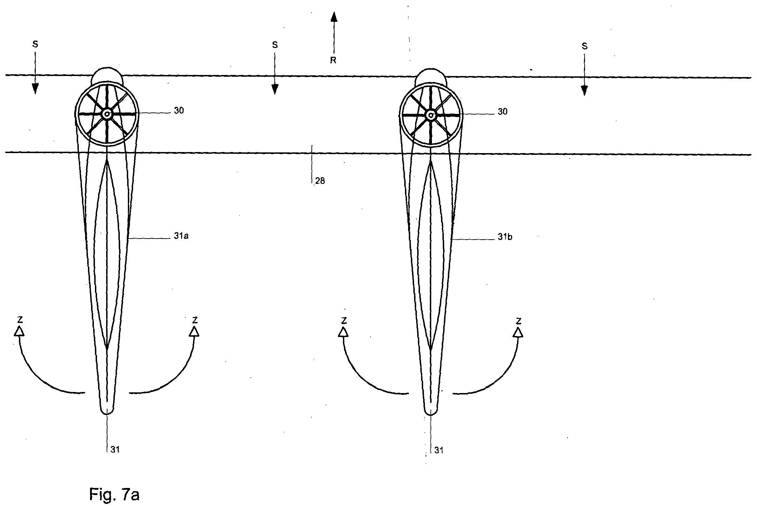

Figures 7a, 7b show two mutually adjoining lamellae 31a, 31b in diagrammatic cross-sectional views in a situation in which the blade 28, to which the lamellae 31a, 31b are mounted so as to be pivotable about pivot axes 30 in the direction of arrows Z, is moving against the direction of flow indicated by arrows S and is moving with the direction of flow indicated by arrows S, respectively. The operation of the watermill device 1 will now be described. When the watermill device 1 is anchored to a bottom 27 of, for example, a river bed by means of pillars 26 with the inlet 3 facing upstream as shown in figure 1b, water of the river will flow along arrows S through the fish and pollution stopping grid 25 and the inlet 3 into the watermill device 1. The fish and pollution stopping grid 25 has a mesh such that the water can flow through it substantially unhampered, small objects and any small fish that do not or substantially do not interfere with the (operation of the) watermill device are allowed to pass through, but coarser objects and comparatively large animals are stopped by the grid 25. To prevent the grid 25 becoming clogged up, it is placed at some angle in front of the inlet 3 as shown in figure 1b, so that pollutants can slide off the grid 25. The water will flow from the inlet 3 into the flow channel 4 inside at a normal current. If the flow is too strong, however, water will flow out through sluice gates in sluice strips 11 and a sluice cylinder 10. The water pressure on the blades or the rotational speed of the blades may be measured for this purpose by a sensor which gives off a signal to a sluice cylinder which can discharge water in a known manner. If so desired, a sensor external to the housing may be used which registers, for example, the flow velocity of the water outside the watermill device. It is also possible for mechanical valves to be opened or closed in response to a sensor signal. This prevents or at least reduces the risk that forces exerted by the water on the blade wheels 18a, 18b, 18c can damage the watermill device 1. Since the side wall 6 of the inlet is lengthened by the profile 16, water is applied in particular to the left-hand side of the blade wheel 18a as viewed in the direction of flow. The lamellae 31 of the relevant blade 28 are closed, i.e. the lamellae 31 extend at least substantially parallel to a central planar surface 29 (cf. figure 2) where the blade 28 is closed and accordingly the flow exerts a force on the relevant blade 28. As long as the force on the lamellae 31 at the upstream side is greater than that at the downstream side, the lamellae 31 will remain at the upstream side of the flow. There the lamellae 31, extending transversely to the direction of flow, will be urged against the raster present downstream of the lamellae 31. As the blade wheel 17a turns further in the rotation direction Pa, the lamellae 31 will pivot to orient themselves as depicted for the other two blades 28 shown in figure 2. As is evident from figure 2, the lamellae 31 will be present at the downstream side of the relevant blade 28 when this blade 28 is moving against the direction of flow and will thus release the relevant blade 28 substantially for the passage of water through the corresponding raster located in the central plane 29. It will be clear at least to those skilled in the art that a rotational movement of the blade wheel 17a is generated and maintained thereby. The flow is subsequently thrust by the profile 16 and the side wall 13 from the blade wheel 17a towards the blade wheel 17b, which turns in the opposite direction by the same principle as described above. The water then flows towards the blade wheel 17c and leaves through the outlet 4 in order to mix itself with water that has flown around the watermill device 1. The velocity of the water flowing through the housing as compared with the velocity of the water flowing around the housing is determined in part by the ratio of the surface area of the upstream side of the inlet to the surface area of the flow channel. Water is accelerated in that an inlet having a larger cross-sectional area than that of the flow channel is used. On the other hand, the velocity is reduced in the flow channel. Given an inlet that is not too large (relative to the flow channel), a Venturi effect will be generated at the outlet whereby the flow inside the flow channel 4 is accelerated and the efficacy of the watermill device is further enhanced. The blade wheels 17a, 17b, 17c rotate about respective rotation shafts 18a, 18b, 18c whose motions are transmitted in a manner known to those skilled in the art, for example by means of a system of gears and rods, to a permanent magnet generator 24 in the PMG compartment 5, where the rotational motion is converted into electricity. This electricity is transported via a cable (hot shown in the figures) to the dry land so that it can be utilized there.

The operation of the watermill device 51 corresponds to that of the watermill device 1 and thus requires no further explanation.

The operation of the watermill device 101 of figures 5 and 6 will now be described. The watermill device 101 is at least substantially open at the upper and the lower side because an upper and a lower wall of the flow channel 104 are absent, in contrast to the previous embodiments. An advantage thereof is that the blade wheels 117 are always well accessible in the case of malfunction and/or for maintenance. The water-guiding members 106a, 106b each have a guiding surface 103 which is located upstream (during operation) and which deflects a portion of the flow that would normally counteract the operation of the watermill device 101 in the direction of the flow channel 104. The flow channel 104 is defined by side walls 112, 113 which closely adjoin the track B of the blades 128 of the relevant blade wheel 117. The distance between the track of the blades 128 and the side walls 112, 113 has been depicted as being comparatively great in the figures 5 and 6. In practice the relevant distance may be minimized in order to limit the quantity of water that can flow between the blades 128 and the side walls 112, 113 without driving the relevant blade 128. After passing through the flow channel 104 the water can freely issue from the watermill device 101. Owing to the substantially symmetrical arrangement of the watermill device 101 the operation thereof is reversible as the direction of flow S is reversed, such as in tidal waters. This is shown in figure 6b, where the orientation of the lamellae 131 of the blades 128 is shown in the case of a direction of flow S of the water being opposed to that of figure 6a. The watermill device 101 need not be adapted for this or differently adjusted. The lamellae 131 and the pivot axes 130 are indeed opposed then, but they act in the same manner as in the situation of figure 6a.

It will be clear that means for stopping fish and/or pollutants, such as grids, may be provided for the watermill device 101 as well. Such means will then have the effect that they guide the fish and/or pollutants to a higher level in the watercourse. The presence or absence of an upper wall that screens the flow channel is immaterial for this.

A major aspect of the present invention is the measure whereby the lamellae always automatically seek the orientation having the lowest resistance owing to the flow of water when the associated blade is moving (partly) against the direction of flow S, i.e. if the motion of the relevant blade has a component opposed to the direction of flow of the water, whereas such an orientation is counteracted or limited when the associated blade is moving (partly) with the direction of flow S, i.e. if the motion of the relevant blade has a component parallel to the direction of flow of the water. Figure 7 shows how this may be implemented according to the present invention. Figure 7a shows the situation in which a blade 28 moves in an opposed direction R relative to the direction of flow S of the water. The lamellae 31a, 31b, which are freely pivotable at least in this situation, will automatically orient themselves in response to this, as shown in figure 7a. This is physically determined. When the relevant blade 28 moves further, the lamellae will always remain oriented parallel to the direction of flow S behind the pivot axis 30 until the moment the relevant blade 28 is oriented parallel to the direction of flow S. This is the moment at which the trailing edge of the relevant lamella 31a located opposite the pivot axis 30 comes into abutment against the adjoining lamella 31b, which thus inhibits any further pivoting of the lamella 31a. This situation is maintained over a rotary motion of approximately 180° of the blade wheel, whereupon the abutment of the lamella 31a against the lamella 31b is lifted again by the flow of water. The operation of the lamellae 131 of the watermill device 101 is comparable to that of the lamellae 31.

It will be clear that various measures are conceivable for realizing an abutment or limitation of the movement of the lamellae. The invention is expressly not limited to the measures shown in figure 7.

Only two embodiments of a watermill device according to the present invention were shown in the figures and explained in the text. It will be clear that various modifications, whether or not obvious to those skilled in the art, are conceivable within the scope of protection of the present invention as defined in the appended claims. Thus it is possible to provide only one, or two, or a greater number of blade wheels in a flow channel. It is also possible to accommodate three, four, or more rows of blade wheels in a housing, preferably but not necessarily in different flow channels. The profiles that guide the flow are desirable but not necessary, and they may have alternative shapes. A watermill device may be provided not only on a riverbed, but also on the bottom of a tidal water, for example in a tidal channel. A tidal channel is comparatively deep and the current therein is usually concentrated, i.e. comparatively strong, and substantially always in the same direction.

## Claims

1. A watermill device (1) for use in flowing water, comprising water-guiding means that define at least one substantially horizontal flow channel (4) with a water supply range situated upstream during operation and a water discharge range situated downstream during operation, wherein the water supply range is funnel-shaped, converging in the direction of the at least one flow channel (4), and wherein the water discharge range is defined by an outlet opening, at least two blade wheels (17, a 17b, 17c) provided in the flow channel and having a rotation shaft (18a, 18b, 18c) that, during operation, is oriented substantially perpendicularly to the direction of flow and at least three blades (28) which are designed such that when moving with a motion component in the direction of flow they have a comparatively high coefficient of resistance to the water flowing through the at least one flow channel (4) and when moving with a motion component against the direction of flow they have a comparatively low coefficient of resistance to the water flowing through the at least one flow channel (4), and transmission means for transmitting the rotary motion of the rotation shaft (18a, 18b, 18c) of the at least two blade wheels to a permanent-magnet generator,
wherein the blades (28) each comprise lamellae (31) that are pivotable about a pivot axis extending at least substantially parallel to the rotation shaft (18a, 18b, 18c) of the blade wheels (17, a 17b, 17c), wherein said pivot axis of each lamella (31) is located at or adjacent one longer side of the respective lamella (31), wherein a pivoting movement of the lamellae (31) is hampered by limiting means when the relevant blade (28) is moving along with the flow, and wherein the lamellae (31) are freely pivotable when the relevant blade (28) is moving against the direction of flow, and wherein a cross-section of a lamella (31) taken from the pivot axis (30) in the direction of the extremity located opposite the pivot axis (30) in the direction perpendicular to the pivot axis (30) of the relevant lamella (31) is designed so as to be converging, wherein the at least two blade wheels (17, a 17b, 17c) are provided one behind the other in the flow channel (4) and in that the at least two blade wheels (17, a 17b, 17c) placed one behind the other rotate in mutually opposed directions, and wherein the outlet of the at least one flow channel (4) extends in a slightly upward direction relative to the at least one flow channel (4) when viewed in the direction of flow.

2. A watermill device according to claim 1, wherein each lamella has a drop shape.

3. A watermill device according to any one or more of the preceding claims, **characterised in that** the water supply range is provided with a protection member that is designed to prevent objects or animals above a certain size that are present in the water from entering the watermill device.

4. A watermill device according to claim 3, **characterised in that** the protection member extends obliquely upwards when viewed in the direction of flow.

5. A watermill device according to any one or more of the preceding claims, **characterised in that** it comprises at least a housing that is defined by the water-guiding means, an upper wall and a lower wall and that accordingly surrounds the flow channel and **in that** the inlet and/or the at least one flow channel are/is provided with at least one sluice opening.

6. A watermill device according to any one or more of the preceding claims, **characterised in that** the watermill device comprises a watertight space in which a permanent magnet generator is accommodated.

7. Use of a watermill device according to any one or more of the preceding claims in a watercourse, such as a river or tidal waters, wherein the at least one flow channel is entirely under the water's surface.

## Patentansprüche

1. Wassermühlenvorrichtung (1) zur Verwendung in strömenden Wasser, umfassend ein Wasserleitmittel das wenigstens einen im Wesentlichen horizontalen Strömungskanal (4) mit einem während des Betriebs stromaufwärts liegenden Wasserzufuhrbereich und einem während des Betriebs stromabwärts gelegenen Wasserabfuhrbereich definiert, wobei der Wasserzufuhrbereich trichterförmig ist, zusammenlaufend in die Richtung des wenigstens einen Strömungskanals (4), und wobei der Wasserabfuhrbereich durch eine Auslassöffnung definiert ist, wenigstens zwei Schaufelräder (17a, 17b, 17c), die in dem Strömungskanal vorgesehen sind und die eine Rotationswelle (18a, 18b, 18c), welche, während des Betriebs, im Wesentlichen senkrecht zur Strömungsrichtung orientiert ist, und wenigstens drei Schaufeln (28), welche so ausgelegt sind, so dass wenn sie sich mit einer Bewegungskomponente in die Strömungsrichtung bewegen sie einen vergleichsweise hohen Widerstandskoeffizienten gegenüber dem durch den wenigstens einen Strömungskanal (4) strömenden Wasser haben und wenn sich mit einer Bewegungskomponente gegen die Strömungsrichtung bewegen sie einen vergleichsweise niedrigen Widerstandskoeffizienten gegenüber dem durch den wenigstens einen Strömungskanal (4) strömenden Wasser haben, und ein Übertragungsmittel zur Übertragung der Rotationsbewegung der Rotationswelle (18a, 18b, 18c) der wenigstens zwei Schaufelräder zu einem Permanentmagnetgenerator haben,
wobei die Schaufeln (28) jeweils Lamellen (31) umfassen die drehbar um eine Drehachse sind, die sich wenigstens im Wesentlichen parallel zur Rotationswelle (18a, 18b, 18c) der Schaufelräder (17a, 17b, 17c) erstreckt, wobei die Drehachse jeder Lamelle (31) an oder neben einer längeren Seite der jeweiligen Lamelle (31) gelegen ist, wobei eine Drehbewegung der Lamellen (31) durch ein Begrenzungsmittel gehemmt ist, wenn sich die betreffende Schaufel (28) mit der Strömung bewegt, und wobei die Lamellen (31) frei drehbar sind, wenn sich die betreffende Schaufel (28) gegen die Strömungsrichtung bewegt, und wobei ein Querschnitt einer Lamelle (31) ausgehend von der Drehachse (30) in die Richtung des äußersten Endes, das gegenüber der Drehachse (30) in die Richtung senkrecht zur Drehachse (30) der betreffenden Lamelle (31) gelegen ist, so ausgelegt ist, dass er zusammenläuft, wobei die wenigstens zwei Schaufelräder (17a, 17b, 17c) hintereinander im Strömungskanal (4) vorgesehen sind und dass die wenigstens zwei hintereinander platzierten Schaufelräder (17a, 17b, 17c) in wechselseitig entgegengesetzte Richtungen rotieren, und wobei der Auslass des wenigstens einen Strömungskanals (4) sich in eine leicht ansteigende Richtung relativ zu dem wenigstens einen Strömungskanal (4) erstreckt, wenn er in Strömungsrichtung betrachtet wird.

2. Wassermühlenvorrichtung nach Anspruch 1,
wobei jede Lamelle eine Tropfenform hat.

3. Wassermühlenvorrichtung nach einem oder mehreren der voranstehenden Ansprüche,
**dadurch gekennzeichnet, dass**
der Wasserzufuhrbereich mit einem Schutzelement versehen ist, welches ausgelegt ist Objekte oder Tiere über einer bestimmten Größe, welche im Wasser vorhanden sind, vom Eindringen in die Wassermühlenvorrichtung abzuhalten.

4. Wassermühlenvorrichtung nach Anspruch 3,
**dadurch gekennzeichnet, dass**
das Schutzelement sich schräg ansteigend erstreckt, wenn es in Strömungsrichtung betrachtet wird.

5. Wassermühlenvorrichtung nach einem oder mehreren der voranstehenden Ansprüche,
**dadurch gekennzeichnet, dass**
es wenigstens ein Gehäuse umfasst das durch das Wasserleitmittel definiert ist, einer oberen Wand und einer unteren Wand und das entsprechend den Strömungskanal umgibt und dass der Einlass und/oder der wenigstens eine Strömungskanal mit wenigstens einer Schleusenöffnung vorgesehen sind/ist.

6. Wassermühlenvorrichtung nach einem oder mehreren der voranstehenden Ansprüche,
**dadurch gekennzeichnet, dass**
die Wassermühlenvorrichtung einen wasserdichten Raum umfasst in welchem ein Permanentmagnetgenerator untergebracht ist.

7. Verwendung einer Wassermühlenvorrichtung nach einem oder mehreren der voranstehenden Ansprüche in einem Wasserlauf, beispielsweise in einem Fluss oder in Tidengewässer, wobei der wenigstens eine Strömungskanal komplett unterhalb der Wasseroberfläche liegt.

## Revendications

1. Dispositif de moulin à eau (1) pour une utilisation dans une eau circulante, comprenant des moyens de guidage d'eau qui définissent au moins un canal d'écoulement (4) essentiellement horizontal ayant une région d'alimentation en eau située en amont pendant le fonctionnement et une région d'évacuation d'eau située en aval pendant le fonctionnement, dans lequel la région d'alimentation en eau est en forme d'entonnoir, convergeant dans la direction de l'au moins un canal d'écoulement (4), et dans lequel la région d'évacuation d'eau est définie par une ouverture de sortie, au moins deux roues à aubes (17a, 17b, 17c) prévues dans le canal d'écoulement et ayant un arbre de rotation (18a, 18b, 18c) qui, pendant le fonctionnement, est orienté essentiellement perpendiculairement au sens d'écoulement et au moins trois aubes (28) qui sont conçues de sorte que, lorsqu'elles se déplacent avec une composante de mouvement dans le sens d'écoulement, elles présentent un coefficient de résistance à l'eau s'écoulant à travers l'au moins un canal d'écoulement (4) comparativement élevé et lorsqu'elles se déplacent avec une composante de mouvement contre le sens d'écoulement, elles présentent un coefficient de résistance à l'eau s'écoulant à travers l'au moins un canal d'écoulement (4) comparativement faible, et des moyens de transmission pour transmettre le mouvement rotatif de l'arbre de rotation (18a, 18b, 18c) des au moins deux roues à aubes à une génératrice à aimants permanents,
dans lequel les aubes (28) comprennent chacune des lamelles (31) qui peuvent pivoter autour d'un axe de pivotement s'étendant au moins essentiellement parallèlement à l'arbre de rotation (18a, 18b, 18c) des roues à aubes (17a, 17b, 17c), dans lequel ledit axe de pivotement de chaque lamelle (31) est situé sur un côté plus long de la lamelle respective (31) ou adjacent à celui-ci, dans lequel un mouvement de pivotement des lamelles (31) est entravé par des moyens de limitation lorsque l'aube concernée (28) se déplace dans le sens d'écoulement, et dans lequel les lamelles (31) peuvent pivoter librement lorsque l'aube concernée (28) se déplace contre le sens d'écoulement, et dans lequel une section transversale d'une lamelle (31) prise à partir de l'axe de pivotement (30) dans la direction de l'extrémité située à l'opposé de l'axe de pivotement (30) dans la direction perpendiculaire à l'axe de pivotement (30) de la lamelle concernée (31) est conçue de manière à converger, dans lequel les au moins deux roues à aubes (17a, 17b, 17c) sont prévues l'une derrière l'autre dans le canal d'écoulement (4) et dans lequel les au moins deux roues à aubes (17a, 17b, 17c) placées l'une derrière l'autre tournent dans des sens mutuellement opposés, et dans lequel la sortie de l'au moins un canal d'écoulement (4) s'étend dans une direction légèrement vers le haut par rapport à l'au moins un canal d'écoulement (4) lorsqu'elle est vue dans le sens d'écoulement.

2. Dispositif de moulin à eau selon la revendication 1, dans lequel chaque lamelle a une forme de goutte.

3. Dispositif de moulin à eau selon l'une quelconque d'une ou plusieurs des revendications précédentes, **caractérisé en ce que** la région d'alimentation en eau est munie d'un élément de protection qui est conçu pour empêcher des objets ou des animaux dépassant une certaine taille qui sont présents dans l'eau d'entrer dans le dispositif de moulin à eau.

4. Dispositif de moulin à eau selon la revendication 3, **caractérisé en ce que** l'élément de protection s'étend obliquement vers le haut lorsqu'il est vu dans le sens d'écoulement.

5. Dispositif de moulin à eau selon l'une quelconque d'une ou plusieurs des revendications précédentes, **caractérisé en ce qu'**il comprend au moins un logement qui est défini par les moyens de guidage d'eau, une paroi supérieure et une paroi inférieure et qui entoure en conséquence le canal d'écoulement et **en ce que** l'entrée et/ou l'au moins un canal d'écoulement sont/est muni(e)(s) d'au moins un pertuis de vidange.

6. Dispositif de moulin à eau selon l'une quelconque d'une ou plusieurs des revendications précédentes, **caractérisé en ce que** le dispositif de moulin à eau comprend un espace étanche à l'eau dans lequel une génératrice à aimants permanents est reçue.

7. Utilisation d'un dispositif de moulin à eau selon l'une quelconque d'une ou plusieurs des revendications précédentes dans un cours d'eau, tel qu'une rivière ou des eaux de marée, dans laquelle l'au moins un canal d'écoulement est entièrement sous la surface de l'eau.
